Europäisches Patentamt

European Patent Office

Office européen des brevets

(19)

(11) Publication number: 0 299 130
A1

## (12) EUROPEAN PATENT APPLICATION

(21) Application number: 87850231.9

(22) Date of filing: 15.07.87

(51) Int. Cl.⁴: F16L 55/16

(43) Date of publication of application:
18.01.89 Bulletin 89/03

(84) Designated Contracting States:
AT BE CH DE ES FR GB GR IT LI LU NL SE

(71) Applicant: Persson, Kjell
Hasselstraket 20 B
S-943 00 Öjebyn(SE)

(72) Inventor: Persson, Kjell
Hasselstraket 20 B
S-943 00 Öjebyn(SE)

(74) Representative: Onn, Thorsten et al
AB STOCKHOLMS PATENTBYRA Box 3129
S-103 62 Stockholm(SE)

(54) Device for lining of existing sewers and the like.

(57) This invention relates to a device in lining of existing sewers etc., mutually assembled pipes (1) being inserted into a conduit (2), said pipes (1) having a first projecting portion (3) and a second projecting portion (4), said portions (3, 4) overlapping each other when several pipes (1) are assembled.

The invention is characterized in that the first projecting portion (3) comprises a peripheral beveled part (5) as seen from its end, an annular groove (6) for a sealing ring immediately followed by a peripheral shoulder (7; 7′), and that the second projecting portion (4) comprises a peripheral beveled part (8) as seen from its end followed by a collar (8; 9′), said pipes (1) being locked in mounted position in a direction pulling apart the pipes (1) through snap-in closure in such a way that the collar (9; 9′) bears upon the shoulder (7; 7′).

FIG.1

EP 0 299 130 A1

## Device in lining of existing sewers etc.

This invention relates to a device in lining of existing sewers etc., mutually assembled pipes being inserted into a conduit, said pipes having a first projecting portion and a second projecting portion, said portions overlapping each other in axial direction when several pipes are assembled.

Lining of conduits, so-called relining, is a quick and economical way of replacing leaking sewers or water conduits.

Relining pipes are known where the separate pipe portions are connected with each other by means of connector pipes. Relining pipes are also known where the separate pipe portions overlap each other. Common to the above known pipes is that these must be pressed into an existing conduit. Otherwise, for instance at pipe fitting, there is a risk that the pipes slide apart. The pipe constructions allow only very small angular deviations and extensions of the pipes.

It is the object of this invention to provide a device in lining of existing sewers where the above-mentioned disadvantages are eliminated.

According to the invention no extra locking devices are required to prevent the pipes from being pulled apart. The pipes can advantageously be drawn into the existing conduit. Mounting of the pipes is carried out from a well but mounting within a conduit is also possible as no extra locking measures are necessary. The result of mounting within a conduit can be checked as the current pipes cannot be pulled apart.

This object of the invention is achieved through a device that has been given the characteristic features defined in the appended claims.

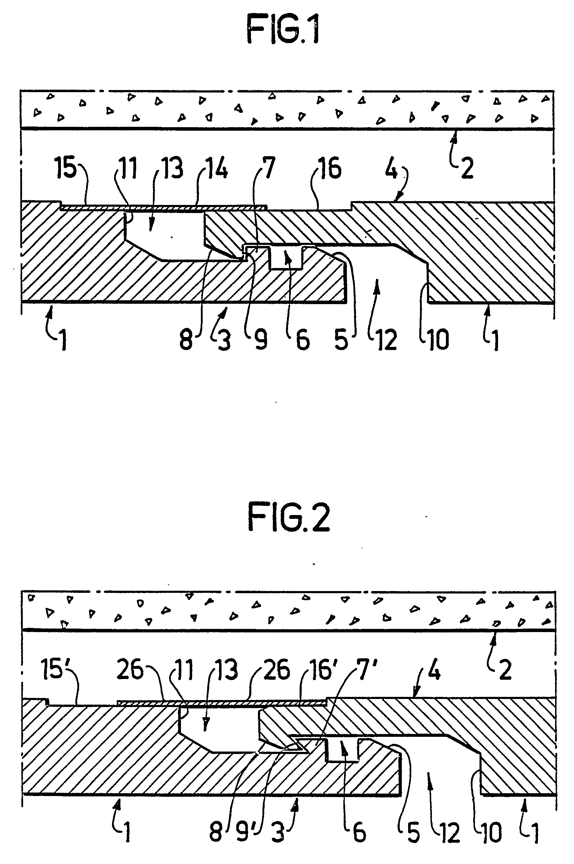

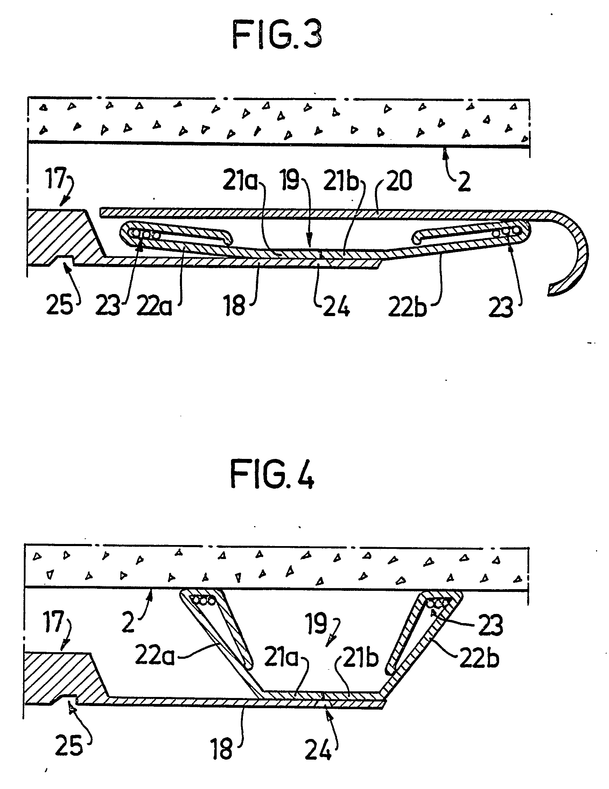

Illustrative examples of the invention will be described below with reference to the appended drawings where Fig. 1 shows half a longitudinal section of a first embodiment of an inventive device, Fig. 2 shows half a longitudinal section of a second embodiment of the inventive device, Fig. 3 shows half a longitudinal section of a third embodiment of the inventive device and Fig. 4 shows the device according to Fig. 3 in another position.

Fig. 1 shows an inventive device in mounted position, mutually assembled pipes 1 being introduced into an existing conduit 2, usually a concrete pipe.

Each pipe 1 preferably of a plastic material has a first projecting portion 3 and a second projecting portion 4 overlapping each other in mounted position. The first portion 3 comprises a peripheral beveled part 5 as seen from its end followed by a groove 6 for a sealing ring, e.g. an O-ring, immediately followed by a peripheral shoulder 7. The second portion 4 comprises a peripheral beveled part 8 as seen from its end followed by a collar 9.

The pipes 1 are locked in mounted position in a direction pulling apart the pipes 1 by snap-in closure, the collar 9 bearing on the shoulder 7.

The pipes 1 are expansible or movable from the mounted position shown in Fig. 1 to a position where the end of the first portion 3 bears on a shoulder 10 of the second portion 4 and the end of the second portion 4 bears on a shoulder 11 of the first portion 3. In this way an annular interior slot 12 and an annular exterior slot 13 are formed in mounted position.

In addition to the above-mentioned expansion of the pipes 1, for instance when hot water is running through, the slots 12 and 13 also allow an angular deviation between the pipes 1 simultaneously as the O-ring maintains its sealing function.

In order to prevent impurities, for instance sand and gravel, from entering the exterior slot 13 an annular elastic cloth 14 is adapted on peripheral ledges 15 and 16 of the respective portions 3 and 4 and covering the slot 13. The cloth 14 is preferably glued onto the ledge 15 and loosely applied to the ledge 16. In such cases where the pipes are pressed into the conduit a slotted sleeve can be applied on top of the cloth 14 which sleeve covers the ledges 15 and 16 throughout their axial extensions and maintains in this way a maximum slot width.

In the embodiment according to Fig. 2 the shoulder 7' and the collar 9' are formed in such a way that the contacting surface is conical.

The slot 13 is covered by a non-slotted sleeve 26 preferably of metal arranged on the ledges 15' and 16'. Before mounting of the pipes 1 the sleeve 26 is on the ledge 15' to be displaced thereafter to the position shown in the figure.

The embodiment according to Fig. 2 is especially suitable for conduits having higher pressures, for instance pressure sewers, outward bending of the projecting portions 3 and 4 in radial directions being prevented effectively.

An end pipe is described in the following with reference to Figs. 2 and 3. At one of its ends the end pipe 17 has a projecting portion to form a ledge 18. The ledge 18 is provided with a sealing means 19 which is enclosed in inactive position by a protective sleeve 20 having a diameter substantially agreeing with the outside diameter of the end pipe 17. In active position of the sealing means 19 (Fig. 3), the sleeve 20 removed, this will seal between the existing conduit 2 and the end pipe 17. The sleeve 20 has an inwardly bent end, the embodiment of which will be explained below.

The sealing means 19 consists of two reversed parts which have each an annular central body 21a and 21b, respectively, and a folded sealing lip 22a and 22b, respectively. The bodies 21a, 21b are fastened to the ledge 18 by glueing, a band or via a bead. The sealing lips 22a, 22b comprise each spring means 23 in the form of a wound spring wire, said spring means 23 providing the contact of the sealing lips with the interior wall of the existing conduit 2.

The flexibility of the sealing lips 22a, 22b will provide a good sealing effect also when the end pipe 17 is placed eccentrically with respect to the conduit 2 or when the conduit 2 is not round but has for instance an oval form. In order to achieve a better contact of the sealing lips 22a and 22b with the interior wall of the conduit, especially when this has an oval form, the spring means can comprise e.g. helical compression springs.

The ledge 18 is provided with one or more injection holes 24 for injecting a sealing compound, for instance silicon rubber, in order to increase the sealing effect of the sealing means 19. It is also possible to extend the ledge 18 and to arrange two or more consecutive sealing means 19 to increase the sealing effect in this way.

When lining an existing conduit 2 by means of a device according to the invention, which lining or so-called relining is preferably carried out from a well, the following procedure can be used. An end pipe 17 is compressed with a pipe 1 which in turn is compressed with another pipe 1 etc. Compression to the mounted position shown in Figs. 1 and 2 is accomplished by means of a special tool (not shown). After compression of two pipes the protective sealing 14 is applied so that it covers the exterior annular slot 13. According as the pipes are compressed to the mounted position they are drawn into the existing conduit 2. For this purpose the end pipe 17 is provided with an interior recess 25 in which a drawing tool (not shown) can be attached. The drawing means can for instance consist of a hoisting machine in connection with an adjoining well. As the pipes are drawn into the conduit a maximum slot is obtained at the pipe joints, i.e. the slot 13 formed in mounting can be maintained. When the pipes are positioned the tool is released from the recess 25 and will then hook onto the inwardly bent end of the sleeve 20 at pulling, the sleeve 20 being removed and the sealing means 19 starting to operate. Of course a corresponding end pipe 17 is arranged in the other end of the pipe system.

The pipes can be manufactured in different lengths to be adapted to the current repair length. Thanks to the existence of slots and beveled portions lining can also be carried out when the existing conduit is heavily bent. At a very strong bending special angular pipe portions can be used.

According to the invention another advantage is obtained in comparison with known technology. In such cases where service conduits are connected to the conduit to be lined digging is necessary according to known technology in order to get by the connection. On the other hand, thanks to the arrangement of an end seal according to the invention digging is eliminated.

The invention is by no means restricted to the embodiments described above but can be freely varied within the scope of the appended claims.

## Claims

1. A device in lining of existing sewers etc., mutually assembled pipes (1) being inserted into a conduit (2), said pipes (1) having a first projecting portion (3) and a second projecting portion (4), said portions (3, 4) overlapping each other in axial direction when several pipes (1) are assembled, **characterized** in that the first projecting portion (3) comprises a peripheral beveled part (5) as seen from its end, an annular groove (6) for a sealing ring immediately followed by a peripheral shoulder (7; 7′), and that the second projecting portion (4) comprises a peripheral beveled part (8) as seen from its end followed by a collar (9; 9′), said pipes (1) being locked in mounted position in a direction pulling apart the pipes (1) through snap-in closure in such a way that the collar (9; 9′) bears upon the shoulder (7; 7′).

2. The device of claim 1, **characterized** in that the collar (9) and the shoulder (7) are embodied in such a way that they overlap each other in the longitudinal direction of the pipes (1) in mounted position of the pipes (1).

3. The device of claims 1-2, **characterized** in that the projecting portions (3, 4) are displaceable from the mounted position to a position where the end of the first portion (3) is in contact with a shoulder (10) of the other portion (4) and the end of the other portion (4) is in contact with a shoulder (11) of the first portion (3) so that an annular interior slot (12) and an annular exterior slot (13) are formed in mounted position.

4. The device of claims 1-3, **characterized** in that a first exterior peripheral ledge (15; 15′) is disposed immediately at the shoulder (11) and a second exterior peripheral ledge (16; 16′) immediately at the end of the second projecting portion (4), an annular protective sealing (14) and/or metal sleeve (16) being arranged on top of the ledges and covering the exterior slot (13).

5. The device of any one of the preceding claims, **characterized** in that an end pipe (17) has a projecting portion at one of its ends to form an exterior ledge (18) which is provided with a sealing means (19) that is enclosed in an inactive position by a sleeve (10) having a diameter substantially agreeing with the outside diameter of the end pipe (17) and is sealing between the conduit (2) and the end pipe (17) in active position by removal of the sleeve (20).

6. The device of claim 5, **characterized** in that the sealing means (19) consists of a central annular body (21a, 21b) and two annular sealing lips (22a, 22b) extending in radial direction from the body (21a, 21b), said sealing lips (22a, 22b) being provided with spring means (23) to provide their contact with the conduit (2).

7. The device of claim 6, **characterized** in that the annular body (21a, 21b) is in two parts, the partition line being located in the range of an injection hole (24) arranged in the ledge (18) for injecting a sealing compound into a cavity defined by the body (21a, 21b), the sealing lips (22a, 22b) and the conduit (2).

# FIG.1

# FIG.2

# FIG.3

# FIG.4

European Patent Office

EUROPEAN SEARCH REPORT

Application Number

EP 87 85 0231

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-U-8 529 159 (WIIK & HÖGLUND GmbH) <br> * Whole document * | 1 | F 16 L 55/16 |
| A | CA-A-1 164 816 (DURATRON SYSTEMS LTD) <br> * Figures 6-9 * | 1,4 | |
| A | DE-A-3 127 079 (H. SCHWADERER) <br> * Abstract; figure * | 1 | |
| E | DERWENT ABSTRACTS, week 8746, class Q 67, 27th September 1987, abstract no. 87-326 033, Derwent Publications Ltd; & SE-A-86 01 402 (K. PERSSON) 27-09-1987, priority 26-03-1986 | 1-7 | |

TECHNICAL FIELDS SEARCHED (Int. Cl.4)

F 16 L

The present search report has been drawn up for all claims

| Place of search | Date of completion of the search | Examiner |
|---|---|---|
| THE HAGUE | 07-03-1988 | BARTSCH A.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)